**Europäisches Patentamt**

**European Patent Office**

**Office européen des brevets**

(19)

(11) **EP 1 363 237 B1**

(12) **EUROPÄISCHE PATENTSCHRIFT**

(45) Veröffentlichungstag und Bekanntmachung des Hinweises auf die Patenterteilung:
**24.08.2005 Patentblatt 2005/34**

(51) Int Cl.$^7$: **G06T 3/40**, G06T 5/00

(21) Anmeldenummer: **03010576.1**

(22) Anmeldetag: **12.05.2003**

(54) **Verfahren zur Darstellung von Bildern mit verändertem Breite-Höhe-Verhältnis**

Method for displaying images having a modified aspect ratio

Méthode pour l'affichage d'images avec un rapport hauteur/largeur modifié

(84) Benannte Vertragsstaaten:
**AT BE BG CH CY CZ DE DK EE ES FI FR GB GR HU IE IT LI LU MC NL PT RO SE SI SK TR**

(30) Priorität: **14.05.2002 DE 10221513**

(43) Veröffentlichungstag der Anmeldung:
**19.11.2003 Patentblatt 2003/47**

(73) Patentinhaber: **CE-SYS GmbH Ilmenau, Computer und Elektronik Systemhaus 98693 Ilmenau (DE)**

(72) Erfinder:
• **Nass, Michael**
  **98693 Martinroda (DE)**
• **Mikolaschek, Ralph**
  **98693 Ilmenau (DE)**
• **Pospiech, Jörg**
  **98693 Ilmenau (DE)**

(74) Vertreter: **Engel, Christoph Klaus**
  **Engel Patentanwaltskanzlei**
  **Marktplatz 6**
  **98527 Suhl/Thüringen (DE)**

(56) Entgegenhaltungen:
EP-A- 1 096 798          WO-A-02/30122
DE-A- 10 043 099          FR-A- 2 673 499

• SARKAR M ET AL: "GRAPHICAL FISHEYE VIEWS OF GRAPHS" STRIKING A BALANCE. MONTEREY, MAY 3 - 7, 1992, PROCEEDINGS OF THE CONFERENCE ON HUMAN FACTORS IN COMPUTING SYSTEMS, READING, ADDISON WESLEY, US, 3. Mai 1992 (1992-05-03), Seiten 83-91, XP000426810

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Darstellung eines in einem Originalformat elektronisch erfassten Originalbildes in einem vom Originalformat hinsichtlich des Breite-Höhe-Verhältnisses abweichenden Anzeigeformat auf einer Anzeigeeinheit.

Sofern Bilder einer bestimmten Umgebung elektronisch erfasst, übertragen und auf einer Anzeigeeinheit dargestellt werden, besteht häufig der Bedarf, einen großen Sichtbereich auf einer kleineren Anzeige abzubilden. Um dieses Problem zu lösen, wurden früher unebene, meist konvex gewölbte Spiegel eingesetzt.

Aus der DE 196 28 672 C2 ist ein deformierbarer Spiegel bekannt, bei welchem eine Spiegelplatte durch einen Stellmechanismus deformiert werden kann, um eine veränderte Abbildung eines zu erfassenden Sichtbereiches zu ermöglichen. Eine solche Anordnung benötigt komplizierte, empfindliche Stellmechanismen und ist daher auf den Einsatz in sehr speziellen Anwendungen beschränkt. Generell ist es mit optisch-mechanischen Abbildungseinrichtungen nicht möglich, eine flexible räumliche Trennung zwischen dem Bildaufnahmegerät und einer Anzeigeeinrichtung bereitzustellen.

Beispielsweise zur Verbesserung der Sichtmöglichkeiten im Straßenverkehr werden Kombinationen aus Kameras und elektronischen Anzeigeelementen in Fahrzeugen eingesetzt. Diese sollen herkömmliche Spiegellösungen ergänzen oder teilweise ersetzen, um insbesondere die Sicht nach hinten und in den Seitenbereichen zu verbessern. Aus der US 5,027,200 ist in diesem Zusammenhang eine verbesserte Seiten- und Rücksichteinrichtung für Motorfahrzeuge bekannt. Dabei werden von mehreren Kameras Teilbilder erfasst, die nebeneinander auf einer speziellen elektronischen Anzeigeeinheit dargestellt werden. Um einen großen Sichtbereich abzudecken, müssen Anzeigeeinheiten mit einer großen Anzeigebreite verwendet werden, die nur wenig verbreitet sind, wodurch die Kosten solcher Systeme drastisch steigen. Derartigen Sichteinrichtungen an Fahrzeugen ist außerdem gemeinsam, dass ein oder mehrere Bilderfassungsgeräte über die äußeren Fahrzeugwände überstehen, wodurch sich insbesondere der $C_w$-Wert verschlechtert, was unter dem Gesichtspunkt eines möglichst geringen Treibstoffverbrauchs nicht wünschenswert ist. Da insbesondere in Straßenverkehrssituationen ein Sichtbereich erfasst und dargestellt werden soll, der ein sehr breites und nur wenig hohes Bild ergibt, sind herkömmliches Anzeigegeräte mit den üblichen Anzeigeformaten (z.B. 4:3 oder 16:9) häufig nicht für eine übersichtliche Darstellung des interessierenden Sichtbereichs geeignet.

Wenn z.B. bis zu drei von Kameras aufgenommene Bilder nebeneinander auf einem Anzeigegerät dargestellt werden sollen, wie dies gemäß der JP 2000 242 896 A vorgeschlagen wird, würde sich bei der Verwendung von einer Kameraauflösung von 720x576 Bildpunkten (Pixel) und vollständiger Abbildung der Originalbilder ein Breite-Höhe-Verhältnis von 3,75 für die Anzeigeeinheit ergeben. Herkömmliche, preisgünstige Anzeigegeräte besitzen jedoch ein Breite-Höhe-Verhältnis von maximal 1,78 (16:9). Die Aufteilung des Originalbildes auf mehrere Anzeigeeinheiten erhöht den technischen Aufwand und bereitet insbesondere Probleme, wenn Sichtbereiche mit wechselnden Formaten dargestellt werden müssen.

In der DE 199 51 699 A1 ist ein Bildverarbeitungsverfahren beschrieben, welches die Darstellung mehrerer Einzelbilder auf nebeneinander angeordneten Monitoren erlaubt. Die von unterschiedlichen Videokameras erfassten Teilbilder können dabei Überlappungsbereiche aufweisen, die durch eine digitale Bildverarbeitungseinheit eliminiert werden, um eine Fehlinterpretation im Überlappunqsbereich der Sichtbereiche zu vermeiden. Der gesamte Sichtbereich muss jedoch auf mehrere Monitore verteilt dargestellt werden. Es besteht keine Möglichkeit; das Format des aus mehreren Teilbildern zusammengesetzten Originalbildes an ein anderes Anzeigeformat anzupassen, wenn die gesamten Bildinformationen erhalten bleiben sollen.

In der DE 195 39 642 A1 ist ein Verfahren zur Visualisierung eines nicht unmittelbar einsehbaren Überwachungsraumes beschrieben. Dazu wird in einer entsprechenden Vorrichtung ein Kameraobjektiv mit extrem weitem Objektwinkel verwendet. Dem Kameraobjektiv ist ein elektronischer Bildsensor zugeordnet, welcher den Helligkeitswert eines Abschnitts des Originalbildes erfasst. Dieses Verfahren dient vor allem der besseren Interpretierbarkeit einer Weitwinkelaufnahme, welche dem Führer eines Fahrzeugs insbesondere das Einparken erleichtern soll. Es bleibt jedoch das Problem bestehen, dass zur Erfassung des interessierenden Sichtbereichs ein relativ breites Bild dargestellt werden muss, dessen Originalformat nicht mit den üblichen Formaten preiswerter Anzeigeeinheiten übereinstimmt.

Eine Veränderung der Skalierung eines Originalbildes zur Anzeige auf einer Anzeigeeinheit mit abweichendem Format ist in Schröder, Hartmut: "Mehrdimensionale Signalverarbeitung", ISBN 3-519-06197-X, Seiten 235 ff. beschrieben. Die Skalierung wird im Zusammenhang mit der Anpassung eines Fernsehbildes aus dem 16:9 Format in das 4:3 Format und umgekehrt vorgenommen. Es wird ein sich linear ändernder Skalierungsfaktor verwendet, um das Bild in den Randbereichen an das Format der Anzeige anzupassen. Der nicht verzerrte Bereich des Bildes muss dazu jedoch immer zentral auf der Anzeige positioniert werden.

Die WO 02/30122 A1 beschreibt ein Verfahren und eine Vorrichtung zur digitalen Verarbeitung sich häufig ändernder Kamerabilder, bei dem die Höhe und Breite digitaler Bilder reduziert wird und gleichzeitig Bildbereiche mit wichtigen visuellen Informationen erhalten bleiben sollen. Dabei werden ein erster Skalierbereich und ein peripherer Skalierbereich des Bildes bestimmt. Die im ersten Skalierbereich liegenden Bildpunkte werden proportional in Höhe und Breite skaliert. Der periphere Skalierbereich wird mit einem höheren Skalierungsfaktor als der erste Skalierbereich skaliert und somit in Bezug zum ersten Skalierbereich komprimiert dargestellt. Auf diese Weise kommt es zwangsläufig zu Unstetigkeitsstellen an den Übergangsstellen zwischen dem ersten Skalierbereich und dem peripheren Skalierbereich, d.h. es treten im Bild unerwünschte Sprünge und Kanten auf.

Eine Aufgabe der vorliegenden Erfindung besteht somit darin, ein Verfahren zur Darstellung eines im Originalformat elektronisch erfassten Originalbildes bereitzustellen, mit welchem es möglich ist, dieses Originalformat in ein Anzeigeformat mit abweichendem Breite-Höhe-Verhältnis zu transformieren, um das gesamte Originalbild auf einer Anzeigeeinheit darzustellen, ohne das dazu das Abschneiden von Randbereichen des Originalbildes erforderlich wird. Insbesondere wird angestrebt, die Transformation in das Anzeigeformat derart zu gestalten, dass der gesamte im Originalformat zur Verfügung stehende Sichtbereich erhalten bleibt, obwohl aufgrund des veränderten Anzeigeformats eine maßstabsgetreue Darstellung des Originalbildes auf der Anzeigeeinheit nicht möglich ist. Schließlich soll die Transformation des Formats in einem vorgegebenen Bereich, der nahezu beliebig ausgewählt werden kann, keine Verzerrungen hervorrufen, so dass in diesem Bereich die maximale Auflösung der Anzeigeeinheit zur Darstellung aller Details erhalten bleibt.

Diese und weitere Aufgaben werden durch das erfindungsgemäße Verfahren gelöst, dessen Verfahrensschritte im Anspruch 1 angegeben sind.

Durch die Bestimmung einer geeigneten Deformationsfunktion, die einen Translationsanteil enthält, und die elektronische Transformation des gesamten Originalbildes wird es erstmals möglich, dass Bildformat dem vorgegebenen Anzeigeformat anzupassen, wobei jedoch ein besonders interessierender Hauptbereich des Originalbildes im Wesentlichen undeformiert bzw. mit nur sehr geringer Deformation angezeigt wird. Damit wird das Problem herkömmlicher Bildverarbeitungssysteme, die gegebenenfalls eine Formatanpassung ermöglichten, wobei das gesamte Bild einer Deformation unterzogen wurde, erfolgreich umgangen. Erfindungsgemäß erfolgt die Deformation einzelner Bildbereiche mit unterschiedlicher Gewichtung. Ein besonders interessierender Hauptbereich, der auf verschiedene Weise bestimmt werden kann, bleibt für den Betrachter im Wesentlichen unverändert, so dass alle Details ohne weiteres wahrgenommen werden können. Je nachdem, wie groß dieser Hauptbereich gewählt wird und wie groß der auf der Anzeigeeinheit verbleibende Platz zur Darstellung der Nebenbereiche ist, werden diese Nebenbereiche unterschiedlich stark deformiert, um das Format des Gesamtbildes an das Anzeigeformat anzupassen.

Die Erfindung ist damit in unterschiedlichsten Systemen anwendbar, soweit die Bilderfassung auf opto-elektronischem Weg erfolgt und somit elektronische Daten zur Verfügung stehen, die das Originalbild repräsentieren und durch die Anwendung geeigneter Softwareroutinen oder die Datenverarbeitung in speziellen Schaltungseinheiten verarbeitet werden können. Ein bevorzugtes Anwendungsgebiet der Erfindung ist in der Fahrzeug- und Überwachungstechnik zu sehen. Beispielsweise kann mit elektronischen Bilderfassungseinheiten der gesamte seitliche und rückwärtige Bereich um ein Fahrzeug herum erfasst werden, so dass als Originalbild ein sehr breites Blickfeld zur Verfügung steht. In herkömmlicher Weise können mehrere Teilbilder zu einem Gesamtbild zusammengesetzt werden, auf welches dann das erfindungsgemäße Verfahren angewendet wird, um den gesamten Sichtbereich auf einer herkömmlichen Anzeigeeinheit darzustellen. In Abhängigkeit von der jeweiligen Fahrsituation sind bestimmte Abschnitte des überwachten Sichtbereiches für den Fahrzeugführer von besonderem Interesse, die dann als Hauptbereich im Wesentlichen undeformiert angezeigt werden. Die Nebenbereiche mit untergeordneter Bedeutung können mehr oder weniger deformiert werden, ohne dass die generelle Bildinformation dabei verloren geht.

Bei einer bevorzugten Ausführungsform ist es möglich, den Hauptbereich im Bild nicht nur festzulegen sondern während einer fortlaufenden Bildverarbeitung innerhalb des Bildes zu verschieben, so dass der undeformiert dargestellte Hauptbereich an die jeweilige Überwachungssituation angepasst werden kann. Um dem Benutzer das Erkennen und gegebenenfalls die manuelle Verschiebung des Hauptbereiches zu erleichtern, kann dieser auf der Anzeigeeinheit besonders gekennzeichnet bzw. hervorgehoben dargestellt werden. Die Verschiebung des Hauptbereichs ist auch automatisch möglich, wenn beispielsweise durch spezielle Bildverarbeitungsalgorithmen ein bewegtes Objekt erkannt und als Hauptbereich definiert wird. Der Hauptbereich kann in diesem Fall an das bewegte Objekt gekoppelt werden und dessen Bewegung nachvollziehen. Speziell bei der Anwendung der Erfindung in der Fahrzeugtechnik ist es auch möglich, den Hauptbereich auf einen bevorzugten Bildbereich zu legen, z.B. ein folgendes oder überholendes Fahrzeug und diesen Hauptbereich trotz einer sich aufgrund des bewegten Bildaufnahmegerätes schnell ändernden Umgebung beizubehalten.

Die vorliegende Erfindung gibt weiterhin ein Bildverarbeitungssystem an, welches zur Ausführung des o.g. Verfahrens geeignet ist. Ein derartiges Bildverarbeitungssystem umfasst mindestens ein Bildaufnahmegerät zur Erfassung eines Originalbildes und mindestens eine Anzeigeeinheit, deren Anzeigeformat vom Originalformat des erfassten Originalbilds bezüglich des Breite-Höhe-Verhältnisses abweicht. Außerdem ist eine Bildverarbeitungseinheit vorgesehen, die neben herkömmlichen Bildverarbeitungsfunktionen in einer integrierten Transformationseinheit das erfindungsgemäße Verfahren ausführt. Die Bildverarbeitungseinheit kann generell durch angepasste elektronische Schaltungseinheiten aufgebaut sein. Zur schnellen Verarbeitung einer großen Bilddatenmenge eignen sich besonders anwenderprogrammierbare Logikschaltkreise (FPGA, ASIC). Die Bildverarbeitungseinheit und insbesondere die Transformationseinheit können aber auch durch einen schnellen Mikroprozessor realisiert werden, auf welchem ein angepasstes Datenverarbeitungsprogramm abläuft.

Das erfindungsgemäße Bildverarbeitungssystem kann mit unterschiedlichsten Anwendungen gekoppelt werden. Immer dann, wenn von elektronischen Bilderfassungseinheiten größere Sichtbereiche erfasst werden, ist es mit dem erfindungsgemäßen Bildverarbeitungssystem möglich, wesentliche Bereiche mit hoher Auflösung darzustellen und eine gezielte Reduktion der Bildinformationen in unwesentlichen Nebenbereichen durchzuführen, ohne dass dabei die Nebenbereiche vollständig verloren gehen würden. Als Bilderfassungsgeräte können CCD-Kameras oder auch CMOS-Kameras eingesetzt werden, die insbesondere beim Einsatz in der Fahrzeug- und Überwachungstechnik eine Reihe von Vorteilen bieten. Wenn unterschiedliche Verkehrsituationen zu überwachen sind, ist die von CMOS-Kameras bekannte logerithmische Helligkeitsverteilung zweckmäßig, um auch bei starken Helligkeitsunterschieden dem Benutzer des Bildverarbeitungssystems die zur Bewältigung verschiedener Verkehrssituationen erforderlichen Bildinformationen optimal darstellen zu können.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnungen. Es zeigen:

Fig. 1 den Ablauf einer Darstellung eines Originalbildes auf einer Anzeigeeinheit mit verändertem Breite-Höhe-Verhältnis unter Anwendung eines Bildverarbeitungsverfahrens nach dem Stand der Technik;

Fig. 2 die Transformation eines Originalbildes in ein abweichendes Anzeigeformat unter Anwendung des erfindungsgemäßen Verfahrens;

Fig. 3 ein Blockschaltbild eines erfindungsgemäßen Bildverarbeitungssystems;

Fig. 4 eine Prinzipdarstellung eines Fahrzeugs, in welchem das Bildverarbeitungssystem verwendet wird;

Fig. 5 eine Detailansicht einer prinzipiellen Montagemöglichkeit eines Bildaufnahmegerätes im Inneren des Fahrzeugs;

Fig. 6 eine Diagrammdarstellung eines bezogenen Translationssummanden für verschiedene Bildspalten auf einem Anzeigegerät.

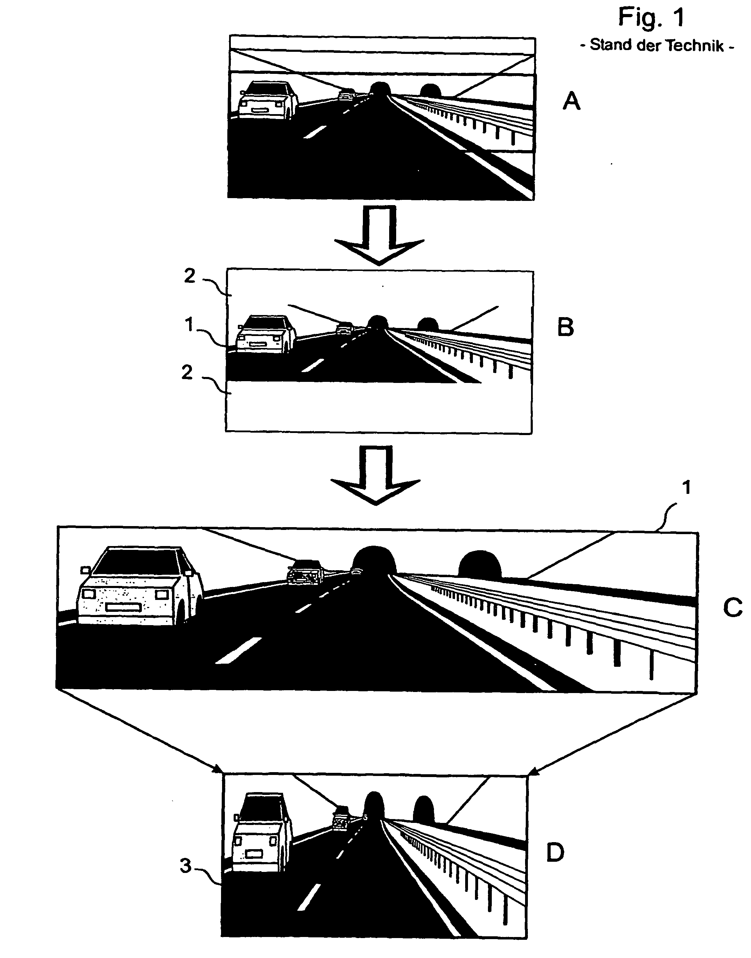

Damit die Unterschiede zu bisher geläufigen Bildverarbeitungsverfahren besser verständlich werden, ist in Fig. 1 eine typische Verkehrssituation in vier vereinfachten Abbildungen gezeigt, wodurch die Darstellung eines Originalbildes auf einer Anzeigeeinheit gemäß dem Stand der Technik verdeutlicht wird. Abbildung A entspricht einem Sichtbereich, der beispielsweise aus einem Fahrzeug auf den rückwärtigen Verkehrsraum einer zweispurigen Richtungsfahrbahn gewonnen werden kann. Durch Beschränken dieses Sichtbereichs lässt sich ein Originalbild 1 definieren, von welchem vorgegebene Randabschnitte 2 ohne inhaltliche Bewertung abgeschnitten werden. Das in dieser Form definierte Originalbild 1 ist in Abbildung B mit den oberen und unteren Randabschnitten 2 gezeigt. Je nach Anwendungsfall kann das Originalbild 1 durch eine optische Blende oder auf elektronischem Wege definiert werden. Als Originalbild wird hier somit der gesamte zu berücksichtigende Ausschnitt aus einem möglichen Sichtbereich verstanden, der auf einer Anzeigeeinheit dargestellt werden soll. Beim Abschneiden der Randbereiche kann es bereits zu wesentlichen Informationsverlusten kommen, da die in den Randbereichen enthaltene Bildinformation nicht bewertet wird.

Abbildung C in Fig. 1 zeigt das vergrößerte Originalbild 1, welches nachfolgend für die Wiedergabe auf der Anzeigeeinheit konfektioniert werden muss. Dazu wäre es nochmals möglich, weitere Randbereiche ohne Bewertung abzuschneiden. Wenn andernfalls wie im dargestellten Beispiel ein Originalbild bereitgestellt wird, dessen Breite deutlich größer als die Höhe ist, muss dass Breite-Höhe-Verhältnis verändert werden, um das gesamte Originalbild auf einer herkömmlichen Anzeigeeinheit unter Nutzung der gesamten Anzeigefläche darstellen zu können. Generell kommen als Anzeigeeinheiten LCD-Anzeigen, CRT-Monitore oder andere Anzeigegeräte in Frage, die an den jeweiligen Anwendungsfall angepasst sind. In Abhängigkeit vom Anwendungsfall ist zu entscheiden, ob eine Farbanzeige oder eine Schwarz/Weiß-Anzeige zweckmäßig ist. Die Anzeigeeinheit muss in jedem Fall in der Lage sein, zahlreiche Bildpunkte darzustellen, aus denen ein Gesamtbild mit der benötigten Auflösung zusammengesetzt werden kann.

Abbildung D zeigt ein Anzeigebild 3, welches aus dem Originalbild 1 durch Stauchung in der Breite erhalten wurde. Das Anzeigebild 3 ist an das Anzeigeformat der verwendeten Anzeigeeinheit angepasst. Sämtliche Bereiche des Anzeigebilds 3 sind gleichmäßig gestaucht, so dass es aufgrund der gegenüber dem Originalbild beibehaltenen Höhe zu einer gleichmäßigen Verzerrung im gesamten Bild kommt. Bei dem hier gezeigten Beispiel ist erkennbar, dass beispielsweise die auf der Straße weiter hinten eingezeichneten Fahrzeuge aufgrund der Stauchung nur noch sehr schwer erkennbar sind und auch die Entfernungsschätzung zu dem vorderen Fahrzeug durch die erfolgte Verzerrung erheblich erschwert wird. Für den Benutzer eines solchen Bildverarbeitungssystems gemäß dem Stand der Technik ist die Erfassung der Verkehrsituation schwierig, da die wirklich interessanten Bereiche genauso verzerrt dargestellt werden, wie weniger interessante Abschnitte des Gesamtbildes. Eine derartige Verzerrung des Originalbildes zur Darstellung in einem anderen Anzeigeformat wird herkömmlich auch durch optische Elemente, insbesondere konvexe Spiegel vorgenommen. Fahrzeugführern sind solche Anwendungen z.B. von speziellen Seitenrückspiegeln am Fahrzeug oder auch von stationären Sichtspiegeln an unübersichtlichen Straßeneinmündungen bekannt.

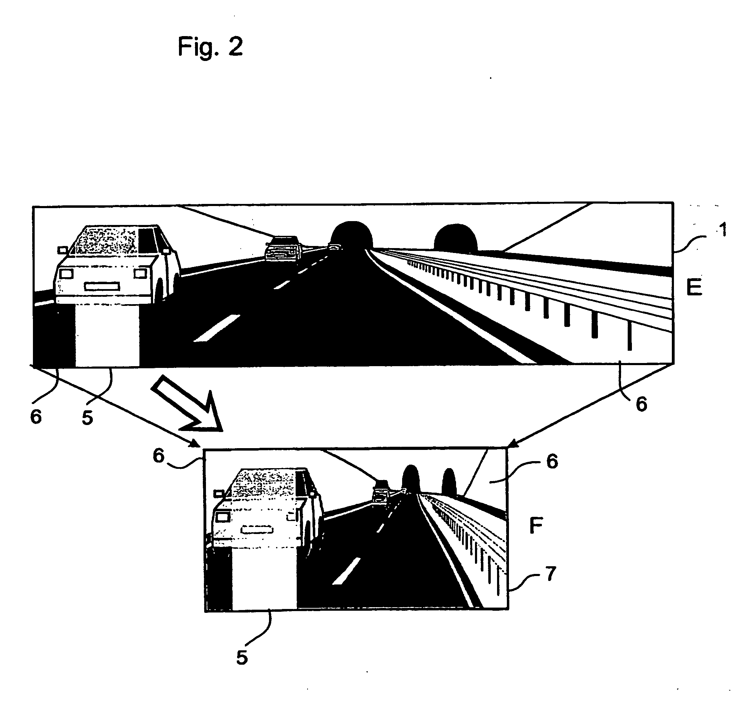

Fig. 2 zeigt in zwei Abbildungen die unterschiedlichen Stufen bei der Bildverarbeitung gemäß der vorliegenden Erfindung. Bei der Anwendung des erfindungsgemäßen Verfahrens geht man wiederum von dem ausgewählten und ggf. grob beschnittenen Originalbild 1 aus, wie es nochmals in Abbildung E dargestellt ist. Im nachfolgenden Verfahrensschritt wird ein Hauptbereich 5 ausgewählt, der hier als aufgehellter Streifen gezeigt ist. Der Hauptbereich 5 kann automatisiert von der jeweiligen Fahrsituation und/oder dem gesamten Inhalt des Originalbildes gewählt werden. Im dargestellten Beispiel liegt für den Fahrer des Fahrzeugs, in welchem das Bildverarbeitungssystem zum Einsatz kommt, das Hauptaugenmerk auf dem unmittelbar hinter bzw. neben ihm fahrenden Fahrzeug. Der Hauptbereich 5 wird somit auf der linken Seite des Originalbildes positioniert, um in diesem besonders interessanten Abschnitt zu liegen.

Je nach Ausführungsform ist es denkbar, dass der Benutzer eines solchen Bildverarbeitungssystems den Hauptbereich manuell verschieben kann, in dem er beispielsweise den ihn besonders interessierenden Bereich auf einem berührungsempfindlichen Bildschirm mit einem Fingerdruck markiert. Wenn das Bildverarbeitungssystem bei einer abgewandelten Ausführungsform stationär zu Überwachunqszwecken betrieben wird, könnte der Hauptbereich 5 auch automatisch definiert werden, durch Erfassen eines sich bewegenden Objektes innerhalb eines großen Überwachungsbereiches, der vollständig im Originalbild dargestellt wird.

Außerhalb des Hauptbereichs 5 sind gleichzeitig Nebenbereiche 6 definiert, die weniger wichtige Bildinformationen enthalten. Es sei darauf hingewiesen, dass innerhalb des Originalbildes auch mehrere Hauptbereiche bestimmt werden können, wenn in einem großen Originalbild mehrere voneinander getrennte Abschnitte von besonderem Interesse für den Betrachter des Bildes sind. Ebenso soll daran erinnert werden, dass die in den Figuren 1 und 2 dargestellten Bilder nur beispielhaften Charakter hinsichtlich des Formats der Abbildungen und der Größe von Hauptbereich und Nebenbereich haben. In anderen Anwendungsfällen wäre es auch möglich, ausgehend von einem Originalbild mit wesentlich größerer Höhe als Breite einen Hauptbereich zu definieren, der ringsherum von Nebenbereichen eingeschlossen ist.

Das Originalbild 1 soll durch Anwendung des erfindungsgemäßen Verfahrens so in ein Anzeigebild transformiert werden, dass im festgelegten Hauptbereich 5 keine oder nur eine sehr geringe Verzerrung bzw. Deformation des Bildes erfolgt, währenddessen in den Nebenbereichen eine stärkere Stauchung zulässig ist.

In Abbildung F von Fig. 2 ist das Ergebnis der Transformation als ungleichmäßig deformiertes Anzeigebild 7 dargestellt. Der Hauptbereich 5, welcher wiederum durch eine Aufhellung deutlich gemacht ist, wird im Wesentlichen ohne Deformation im Anzeigebild 7 wiedergegeben. Die Nebenbereiche 6, die an den Hauptbereich 5 angrenzen, werden nichtlinear aber ohne Unstetigkeitsstellen deformiert, so dass die gesamte Bildinformation des Originalbildes im Anzeigebild enthalten ist, jedoch innerhalb der Nebenbereiche 6 in deformierter Weise dargestellt wird. Um Unstetigkeitsstellen zu vermeiden, welche beim Betrachten der Anzeige zu Missverständnissen führen würden, erfolgt in der Nähe des Hauptbereichs 5 nur eine geringere Deformation, während in den äußeren Randbereichen eine stärkere Deformation notwendig ist, um das gesamte Bild auf der Anzeigeeinheit wiederzugeben. Die Einzelheiten der dafür notwendigen Transformation werden weiter unten noch detaillierter erläutert.

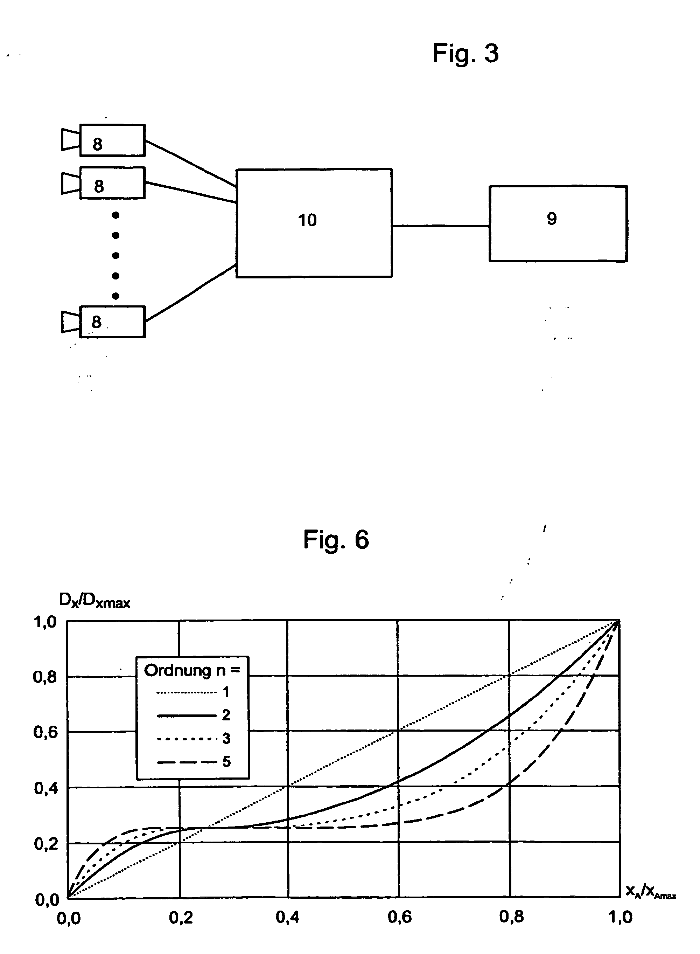

Fig. 3 zeigt ein vereinfachtes Blockschaltbild eines erfindungsgemäßen Bildverarbeitungssystems. Das Bildverarbeitungssystem umfasst ein oder mehrere Bilderfassungsgeräte 8, beispielsweise CCD- oder CMOS-Kameras. Weiterhin ist mindestens eine Anzeigeeinheit 9 vorgesehen, wobei auch mehrere Anzeigeeinheiten angekoppelt werden können, wenn beispielsweise die Bildinformation an verschiedenen Orten zur Verfügung stehen soll oder großflächig auf mehrere Anzeigen verteilt werden soll. Zwischen die Bilderfassungsgeräte 8 und die Anzeigeeinheit 9 ist eine Bildverarbeitungseinheit 10 gekoppelt, welche eine Transformationseinheit einschließt, in der das Verfahren zur Deformation des Originalbildes ausgeführt wird.

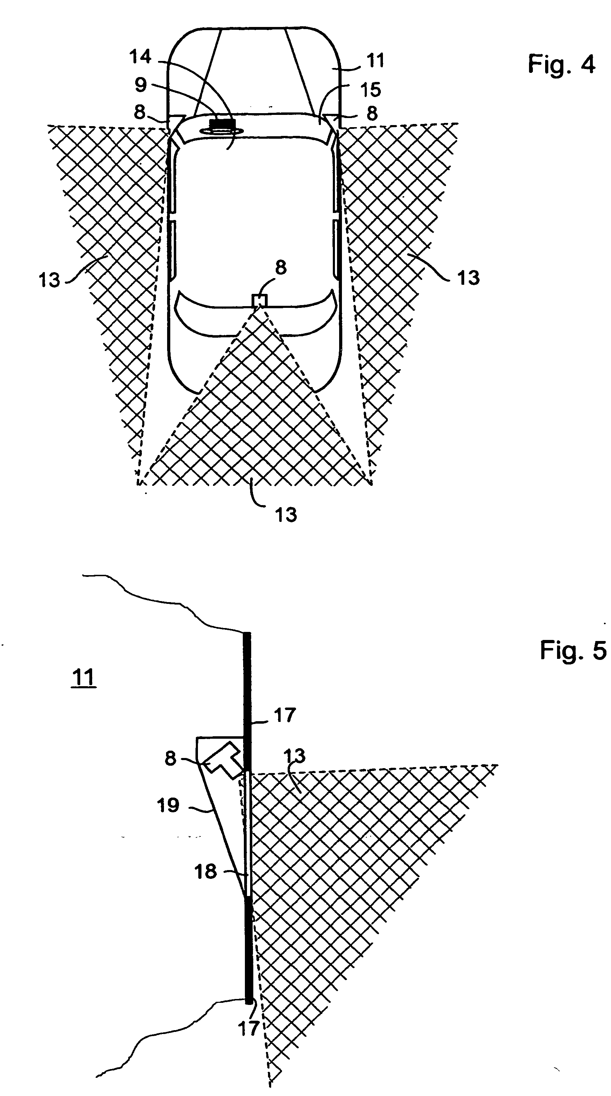

Fig. 4 zeigt ein Fahrzeug 11 in einer vereinfachten Ansicht von oben. Im Fahrzeug 11 ist das Bildverarbeitungssystem integriert, welches hier drei Kameras 8 als Bilderfassungsgeräte und eine Anzeigeeinheit 9 umfasst. Die drei Bilderfassungsgeräte 8 besitzen jeweils einen Erfassungsbereich 13, so dass im dargestellten Beispiel drei Teilbilder an das Bildverarbeitungssystem geliefert werden und von diesem vor der Durchführung der Transformation zu einem einheitlichen Originalbild zusammengesetzt werden müssen. Aus dem Stand der Technik sind für diese Aufgabe Datenverarbeitungsanordnungen bekannt, so dass auf eine detaillierte Beschreibung dieser vorbereitenden Bildverarbeitung verzichtet werden kann. In bestimmten Fahrsituationen wird es auch ausreichend oder wünschenswert sein, lediglich das Bild eines einzelnen Bilderfassungsgerätes 8 als Originalbild zu verarbeiten, so dass die von den anderen Bilderfassungsgeräten gelieferten Bildsignale ausgeblendet werden können.

Die Anzeigeeinheit 9 ist im Fahrzeug 11 so positioniert, dass sie von einer Fahrerposition 14 gut eingesehen werden kann. Beispielsweise kann ein Monitor im Armaturenbrett des Fahrzeugs positioniert werden. Ebenso ist es mit modernen Projektionseinheiten möglich, ein virtuelles Bild in einen vorgegebenen Abschnitt der Frontscheibe des Fahrzeugs zu projizieren. Die Anzeigeeinheit 9 könnte auch in mehrere Anzeigen aufgeteilt sein, um sie beispielsweise an einer Seitenposition 15 anzuordnen, nämlich in der Blickrichtung, die der Fahrer des Fahrzeugs gewohnheitsmäßig für einen Blick in den Seitenrückspiegel verwendet.

Fig. 5 zeigt in einer Detailzeichnung die Positionierung der Kamera 8, die auf der rechten Seite im Fahrzeug 11 angebracht ist. Durch die besondere Bildverarbeitung wird es möglich, die Bilderfassungsgeräte vollständig innerhalb des Fahrzeugs zu positionieren, ohne das dadurch Einschränkungen hinsichtlich des optischen Erfassungsbereichs zu befürchten sind. Dazu ist in einer äußeren Fahrzeugwand 17 ein durchsichtiger Wandabschnitt 18 eingelassen, durch welchen die Kamera 8 das Bild des Erfassungsbereichs 13 aufnehmen kann. Auf der Fahrzeuginnenseite ist vorzugsweise ein Gehäuse 19 vorgesehen, welches die Kamera 8 einkapselt und so vor ungewollten Positionsveränderungen und unerwünschtem Seitenlichteinfall schützt. Der wesentliche Vorteil einer derartigen Positionierung der Kamera 8 besteht darin, dass keinerlei Kameraabschnitte über die äußere Fahrzeugwand hinausragen, was sich vorteilhaft auf den Windwiderstand des Fahrzeugs auswirkt.

Nachfolgend wird das Verfahren näher erläutert, welches ausgeführt werden muss, um die oben bereits beschriebene Transformation des Originalbildes in das Anzeigebild mit verändertem Breite-Höhe-Verhältnis durchzuführen. Da das Originalbild aus elektronisch erfassten Originalbildpunkten besteht, müssen die einzelnen Originalbildpunkte in die Anzeigebildpunkte transformiert werden. Jeder Originalbildpunkt ist in seiner Position durch Koordinaten definiert, nämlich die Breite $x_0$ und die Höhe $y_0$. Der darzustellende Anzeigebildpunkt befindet sich an einer Position auf der Anzeigeeinheit mit den Koordinaten $x_A$ (Breite) und $y_A$ (Höhe). Das erfindungsgemäße Verfahren kann besonders vorteilhaft und mit geringem Berechnungsaufwand ausgeführt werden, wenn man von den diskreten Koordinaten der einzelnen Bildpunkte der Anzeigeeinheit ausgeht und diesen die Koordinaten des Originalbildes zugeordnet werden. Die Überführung der Anzeigebildpunkte in die Originalbildpunkte kann durch die folgende Matrizengleichung definiert werden:

$$[x_0 \quad y_0 \quad 1] = [x_A \quad y_A \quad 1] \bullet \begin{bmatrix} S_x & 0 & 0 \\ 0 & S_y & 0 \\ D_x & D_Y & 1 \end{bmatrix}$$

In dieser Gleichung sind $S_x$ und $S_y$ Skalierungsfaktoren, während $D_x$ und $D_y$ Translationssummanden sind. Eine Skalierung der Koordinaten wird zweckmäßiger Weise vorgenommen, wenn dies aufgrund der abweichenden Formate von Bildaufnahme- und Anzeigegerät erforderlich ist. Wenn eine Skalierung erforderlich ist, um eine Dimension (Breite oder Höhe) anzupassen, sollte $S_x = S_y$ gewählt werden, um zusätzliche (ungewollte) Bildverzerrungen auszuschließen. Ansonsten sollten die Skalierungsfaktoren gleich **1** gewählt werden.

Eine Translation ist im allgemeinen nur in einer Dimension (Breite oder Höhe) erforderlich, wobei der nicht benutzte Translationssummand gleich **0** gesetzt wird. Es können jedoch auch beide Translationssummanden das Bild verändern.

Erfindungsgemäß soll die Deformation der einzelnen Bildpunkte in Abhängigkeit von der Lage dieser Bildpunkte innerhalb der Anzeigeeinheit unterschiedlich stark erfolgen. Der Translationssummand $D_x$ ist somit eine Funktion von $x_A$, wenn die gewünschte Stauchung einzelner Bildbereiche abhängig von der Spaltenposition $x_A$ ist. Sofern in einem anderen Ausführungsfall eine Stauchung in **y**-Richtung (d.h. Höhenänderung) erfolgen soll, wäre der Translationssummand $D_y$ als Funktion von $y_A$ zu betrachten. Generell sei darauf hingewiesen, dass bei der Transformation der Bildpunkte auch eine negative Stauchung denkbar ist, wenn das Originalbild zur Formatanpassung in einer Richtung gestreckt werden soll.

Die Funktion des Translationssummanden kann verschiedene Ordnungen **n** für eine der Koordinaten ($x_A$, $y_A$) aufweisen. Die Koordinaten der einzelnen Originalbildpunkte, die zur Darstellung gebracht werden sollen, können somit folgendermaßen berechnet werden:

$$x_0 = S_x \cdot x_A + D_x = S_x \cdot x_A + f\!\left(x_A^n\right)$$

$$y_O = S_y \cdot y_A + D_y = S_y \cdot y_A + f\left(y_A^n\right)$$

Durch unterschiedliche Ordnungen **n** lässt sich die Steilheit der Deformationsänderung im Nebenbereich und die Breite des nicht bzw. kaum deformierten Hauptbereichs einstellen. Auf diese Weise kann die Transformation des Originalbildes an spezielle Anwendungsfälle angepasst werden. Beispielsweise sind Situationen denkbar, in denen der Hauptbereich nur einen sehr schmalen Abschnitt im gesamten Anzeigebild einnehmen muss und dafür die Deformation in den Nebenbereichen relativ gleichmäßig und relativ gering sein wird. Wenn in einem anderen Anwendungsfall der Hauptbereich mit geringer bzw. ohne Deformation einen großen Abschnitt im Anzeigebild einnimmt, führt dies automatisch dazu, dass die im Nebenbereich liegenden Bildinformationen wesentlich stärker verzerrt werden müssen, um vollständig im Anzeigebild dargestellt werden zu können, wobei der Grad der Gesamtverzerrung abhängig vom Unterschied zwischen dem Originalformat und dem Anzeigeformat ist.

Als Ausgangswerte für die Berechnungen, die bei Ausführung des Verfahrens z.B. programmgesteuert ablaufen, dienen die maximalen Abmessungen des Originalbildes und des Anzeigebildes. Weichen beide in der jeweiligen Dimension maximal darstellbaren Bildpunkte voneinander ab (d.h. die Koordinaten unterscheiden sich: $x_{Amax} \neq x_{Omax}$; $y_{Amax} \neq y_{Omax}$), müssen Skalierungsfaktoren ($S_x, S_y$) in die Berechnung einbezogen werden. Stimmt eine Dimension überein, so wird nur eine Translationsberechnung in eine Koordinatenrichtung durchgeführt. Die dazu notwendigen Eingabegrößen beschränken sich auf die Ordnung **n** und die relative Position des nicht bzw. kaum deformierten Hauptbereiches (**H in** % der maximalen Bildkoordinate). Das Berechnungsverfahren für die spaltenweise Translation (**x**-Koordinate) ergibt damit für den maximalen Translationssummanden $D_{xmax}$, seinen Wert an der Position des Hauptbereiches $D_{xH}$ und die Spaltenkoordinate des Hauptbereiches im Anzeigebild $x_{AH}$:

$$D_{xmax} = x_{O\,max} - S_x \cdot x_{A\,max}$$

$$D_{xH} = D_{xmax} \cdot \frac{H}{100}$$

$$x_{AH} = x_{Amax} \cdot \frac{H}{100}$$

Der Translationssummand $D_x$ lässt sich aus den damit gegebenen Größen abschnittsweise berechnen:

$$D_x = F \cdot |x_A - xAH|^n + D_{xH}$$

Dabei wird der Faktor **F** aufgeteilt als eine Konstante $F_{<xAH}$ für Spalten, die kleiner als die Spaltenkoordinate des Hauptbereiches sind, und eine Konstante $F_{>xAH}$ für Spalten, die größer als die Spaltenkoordinate des Hauptbereiches sind:

$$F_{<AH} = -\frac{D_{xH}}{x_{AH}^n}$$

$$F_{>AH} = \frac{(D_{xmax} - D_{xH})}{(x_{Amax} - x_{AH})^n}$$

Wird der berechnete Translationssummand $D_x$ gemäß oben angegebenen Gleichung zu der Anzeigekoordinate $x_A$ addiert, ergibt sich die zur Anzeige gebrachte Spalte des Originalbildes $x_o$:

$$x_O = S_x \cdot x_A + D_x = S_x \cdot x_A + F \cdot |x_A - x_{AH}|^n + D_{xH}$$

Fig. 6 zeigt in einem Diagramm den Verlauf des normierten Translationssummanden $D_x/D_{xmax}$ für verschiedene Bildspalten des auf der Anzeigeeinheit wiedergegebenen Anzeigebildes $x_A/x_{Amax}$ (bezogen auf die maximale Bildspaltenanzahl). Im Diagramm ist der Verlauf des Translationssummanden für unterschiedliche Ordnungen **n** mit **n** = **1, 2, 3, 5** eingezeichnet. Im Fall **n** = **1** würde sich ein gleichmäßig deformiertes Anzeigebild ergeben, wie es in Abbildung D von Fig. 1 gezeigt ist. Ein nicht deformierter Hauptbereich liegt in diesem Fall nicht vor. Im Fall **n** = **3** ergibt sich die Darstellung gemäß Abbildung F in Fig. 2, mit den dort gezeigten Haupt- und Nebenbereichen. Der nicht deformierte Hauptbereich, der im Anzeigebild mit der gleichen Auflösung wie das Originalbild dargestellt wird, kann aus dem Diagrammverlauf in Fig. 6 für die entsprechende Ordnung **n** abgelesen werden. Der Hauptbereich entspricht dem Wertebereich $x_A/x_{Amax}$ mit konstantem $D_x/D_{xmax}$.

Die beschriebene Berechnung kann auch zeilenweise für die **y**-Koordinate einzeln oder in Kombination mit der **x**-Koordinate angewendet werden. Für die Berechnung mit beiden Koordinaten ergibt sich ein kreisrunder nicht bzw. kaum deformierter Hauptbereich im Anzeigebild.

Wie bereits oben erwähnt wurde, ergeben sich unterschiedlichste Einsatzgebiete für die vorliegende Erfindung. Im Bereich der Überwachungstechnik wird es durch die Erfindung z.B. möglich, die von mehreren Kameras gelieferten Bilder auf einem einzigen Anzeigegerät darzustellen. In Verbindung mit einer Bildverarbeitung zur Bewegungserkennung kann der Hauptbereich einer erkannten Bewegung zugeordnet werden, so dass ein sich bewegendes Objekt in voller Auflösung auf der Anzeigeeinheit abgebildet wird. Durch die Bestimmung mehrerer Hauptbereiche können auch mehrere Objekte mit maximaler Auflösung dargestellt werden. Der Hauptbereich kann der festgestellten Bewegung folgen, wodurch eine Bewegungsüberwachung verbessert möglich ist.

Die Erfindung kann auch mit speziellen Bildbearbeitungstechniken kombiniert werden, um beispielsweise die im Hauptbereich befindlichen Bildpunkte besonders hervorzuheben (spezielle Farbgebung oder erhöhter Helligkeitswert).

## Bezugszeichenliste

| | |
|---|---|
| 1 | Originalbild |
| 2 | Randabschnitte |
| 3 | Anzeigebild |
| 5 | Hauptbereich |
| 6 | Nebenbereiche |
| 7 | ungleichmäßig deformiertes Anzeigebild |
| 8 | Kamera/Bilderfassungsgerät |
| 9 | Anzeigeeinheit |
| 10 | Bildverarbeitungseinheit |
| 11 | Fahrzeug |
| 13 | Erfassungsbereiche |
| 14 | Fahrerposition |
| 15 | Seitenposition |
| 17 | äußere Fahrzeugwand |
| 18 | durchsichtiger Wandabschnitt |
| 19 | Gehäuse |

## Patentansprüche

1. Verfahren zur Darstellung eines in einem Originalformat elektronisch erfassten Originalbildes (1) in einem vom Originalformat hinsichtlich des Breite-Höhe-Verhältnisses abweichenden Anzeigeformat auf einer Anzeigeeinheit (9) als deformiertes Anzeigebild (7), die folgenden Schritte umfassend:

   • Erfassen des Originalbildes (1) mit zahlreichen Originalbildpunkten;
   • Bestimmen eines Hauptbereichs (5) im Originalbild, welcher undeformiert angezeigt werden soll, und eines oder mehrerer Nebenbereiche (6), welche deformiert angezeigt werden können;
   • Bestimmen eines Anzeigeformats, welches dem physischen Format der Anzeigeeinheit (9) entspricht;
   • Bestimmen einer Deformationsfunktion mit mindestens einem Translationsanteil, welche die Originalkoordinaten $(x_0, y_0)$ der Originalbildpunkte in Anzeigekoordinaten $(x_A, y_A)$ überführt, wobei der Hauptbereich (5) undeformiert abgebildet wird und der Nebenbereich (6) nichtlinear deformiert abgebildet wird;
   • Transformation des Originalbildes, wobei die Originalkoordinaten $(x_0, y_0)$, die zur Anzeige gebracht werden, durch Anwendung der folgenden nichtlinearen Deformationsfunktion auf die Anzeigekoordinaten $(x_A, y_A)$ aus

diesen bestimmt werden:

$$x_0 = S_x \cdot x_A + D_x = S_x \cdot x_A + f(x_A^n)$$

$$y_0 = S_y \cdot y_A + D_y = S_y \cdot y_A + f(y^n A)$$

wobei $S_x$, $S_y$ Skalierungsfaktoren und $D_x$, $D_y$ Translationssummanden sind, und n>1 gilt;
- Anzeige der Anzeigebildpunkte im Anzeigeformat auf der Anzeigeeinheit (9).

2. Verfahren nach Anspruch 1, **dadurch gekennzeichnet, dass** das Originalbild (1) vor der Transformation aus mehreren Teilbildern zusammengesetzt wird, die von mehreren Bildaufnahmegeräten (8) bereitgestellt werden.

3. Verfahren nach Anspruch 1 oder 2, **dadurch gekennzeichnet, dass** es in Echtzeit auf schnelle Bildfolgen, insbesondere auf Videobildsequenzen angewendet wird.

4. Verfahren nach einem der Ansprüche 1 bis 3, **dadurch gekennzeichnet, dass** der undeformiert zu transformierende Hauptbereich (5) im Originalbild (1) automatisch oder aufgrund von Benutzervorgaben verschoben wird und laufend eine Aktualisierung des Anzeigebildes (7) durch fortgesetzte Transformation erfolgt.

5. Verfahren nach einem der Ansprüche 1 bis 4, **dadurch gekennzeichnet, dass** die Deformationsfunktion so gewählt wird, dass im gesamten Anzeigebild keine Unstetigkeitsstellen auftreten.

6. Verfahren nach einem der Ansprüche 1 bis 5, **dadurch gekennzeichnet, dass** im Originalbild (1) mehrere Hauptbereiche (5) bestimmt werden, die alle undeformiert im Anzeigebild (7) angezeigt werden.

7. Verfahren nach einem der Ansprüche 1 bis 6, **dadurch gekennzeichnet, dass** weiterhin eine Bildanalyse des Originalbildes erfolgt, um zusätzliche Bildinformationen zu ermitteln und bei Bedarf zur Anzeige zu bringen, insbesondere den Abstand zu erkannten Objekten, die Geschwindigkeit von bewegten Objekten, die Differenzgeschwindigkeit zwischen einem erkannten Objekt und einem bewegten Bildaufnahmegerät, die Größe von erkannten Objekten.

8. Bildverarbeitungssystem mit einem Bildaufnahmegerät (8) zur Erfassung eines Originalbildes (1) in einem Originalformat, mit einer Anzeigeeinheit (9), die ein Anzeigeformat mit vom Originalformat abweichenden Breite-Höhe-Verhältnis aufweist, und mit einer Bildverarbeitungseinheit (10), die eine Transformationseinheit einschließt, welche ein Verfahren nach einem der Ansprüche 1 bis 7 ausführt, um ein transformiertes Anzeigebild (7) auf der Anzeigeeinheit (9) anzuzeigen.

9. Bildverarbeitungssystem nach Anspruch 8, **dadurch gekennzeichnet, dass** es mehrere Bilderfassungsgeräte (8) umfasst, welche Teilbilder an die Bildverarbeitungseinheit (10) übermitteln, welche die Teilbilder zum Originalbild zusammensetzt und dann der Transformationseinheit bereitstellt.

10. Bildverarbeitungssystem nach Anspruch 8 oder 9, **dadurch gekennzeichnet, dass** es in ein Fahrzeug (11) integriert ist, wobei die Bilderfassungsgeräte durch Kameras (8) gebildet sind, die innerhalb des Fahrzeugs (11) befestigt sind, nicht über die äußere Fahrzeugwandung (17) hinausragen und die Bilder durch transparente Abschnitte (18) in der Fahrzeugwandung (17) aufnehmen.

11. Bildverarbeitungssystem nach einem der Ansprüche 8 bis 10, **dadurch gekennzeichnet, dass** die Anzeigeeinheit (9) aus mehreren voneinander getrennten Anzeigeflächen besteht.

**Claims**

1. A method for displaying an original image (1) electronically captured in an original format in a display format deviating from the original format as regards the width-height-relationship, as a deformed display image (7) on a display unit (9), comprising the following steps:

- Capturing the original image (1) with numerous original pixels;
- Determining a principal region (5) in the original image which is to be displayed undeformed, and one or more secondary regions (6) which may be displayed deformed;
- Determining a display format which corresponds to the physical format of the display unit (9);
- Determining a deformation function with at least one translation portion, which translates the original coordinates $(x_0, y_0)$ into display coordinates $(x_A, y_A)$; whereby the principal region (5) is displayed undeformed and the secondary region (6) is displayed non-linearly deformed;
- Transformation of the original image whereby the original coordinates $(x_0, y_0)$ brought to display are determined from the display coordinates $(x_A, y_A)$ by applying the following non-linear deformation function to them:

$$x_0 = S_x \cdot x_A + D_x = S_x \cdot x_A + f(x_A^n)$$

$$y_0 = S_y \cdot y_A + Dy = S_y \cdot y_A + f(y_A^n)$$

whereby $S_x$, $S_y$ are skaling factors and $D_x$ $D_y$ are translation summands and n>1 applies;
- Display of the display pixels in the display format on the display unit (9).

2. A Method according to claim 1, **characterised in that** the original image (1), prior to the transformation, is composed of several part images which are provided by several image capturing devices (8).

3. A Method according to claim 1 or 2, **characterised in that** it is applied to fast image sequences, in particular to video image sequences in real time.

4. A Method according to one of claims 1 to 3, **characterised in that** the undeformed principal region (5) to be transformed in the original image (1) is displaced automatically or on the basis of user selections and **in that** the display image (7) is constantly updated through continued transformation.

5. A Method according to one of claims 1 to 4, **characterised in that** the deformation function is selected such that no points of discontinuity occur in the entire display image.

6. A Method according to one of claims 1 to 5, **characterised in that** in the original image (1), several principal regions (5) are determined which are displayed undeformed in the display image (7).

7. A Method according to one of claims 1 to 6, **characterised in that** an image analysis of the original image is also carried out in order to ascertain additional image data and bring them to display when required, in particular the distance to recognised objects, the speed of moving objects, the difference speed between a recognised object and a moving image capturing device, the size of recognised objects.

8. An image processing system comprising an image capturing device (8) for capturing an original image (1) in an original format, a display unit (9) having a display format with a width-height-relationship deviating from the original format, and an image processing unit (10) including a transformation unit, which executes a method according to one of claims 1 to 7, in order to display a transformed display image (7) on the display unit (9).

9. An image processing system according to claim 8 **characterised in that** it comprises several image capturing devices (8), which transmit part images to the image processing unit (10) which combines the part images to form an original image and then provides this to the transformation unit.

10. An image processing system according to claim 8 or 9, **characterised in that** it is integrated into a vehicle (11), whereby the image capturing devices are formed by cameras (8) attached inside the vehicle (11), do not extend beyond the outer wall (17) of the vehicle and capture the images through transparent sections (18) in the vehicle wall (17).

11. An image processing system according to one of claims 8 to 10, **characterised in that** the display unit (9) consists of several display areas separate from one another.

**Revendications**

1. Procédé de représentation d'une image originale enregistrée électroniquement en format original (1) dans un format d'affichage divergeant du format original en ce qui concerne le rapport largeur-hauteur, sur une unité d'affichage (9), sous forme d'image affichée déformée (7), comprenant les étapes suivantes :

   • enregistrement de l'image originale (1) comprenant de nombreux éléments d'image originale ;
   • détermination dans l'image originale d'une zone principale (5) qui doit être affichée sans déformation et d'une ou plusieurs zones accessoires (6) qui peuvent s'afficher avec une déformation ;
   • détermination d'un format d'affichage qui corresponde au format physique de l'unité d'affichage (9) ;
   • détermination d'une fonction de déformation avec au moins une proportion de translation qui transforme les coordonnées originales ($x_0$, $y_0$) des éléments d'image originale en coordonnées d'affichage ($x_A$, $y_A$), la zone principale (5) étant représentée sans déformation et la zone accessoire (6) étant représentée avec une déformation non linéaire ;
   • transformation de l'image originale, les coordonnées originales ($x_0$, $y_0$) qui doivent être affichées étant, en appliquant la fonction de déformation non linéaire suivante aux coordonnées d'affichage ($x_A$, $y_A$), déterminées à partir de celles-ci :

$$x_0 = S_x \cdot x_A + D_x = S_x \cdot x_A + f(x_A^n)$$

$$y_0 = S_y \cdot y_A + D_y = S_y \cdot y_A + f(y_A^n)$$

   sachant que $S_x$ $S_y$ sont des facteurs de multiplication et $D_x$ $D_y$ des termes de sommation de translation et qu'on a n > 1 ;
   • affichage des éléments d'image à afficher en format d'affichage sur l'unité d'affichage (9).

2. Procédé selon la revendication 1, **caractérisé en ce que** l'image originale (1) est composée avant transformation de plusieurs images partielles qui sont fournies par plusieurs appareils de prise d'image (8).

3. Procédé selon la revendication 1 ou 2, **caractérisé en ce qu'**il est appliqué en temps réel à des suites d'images rapides, notamment des séquences vidéo.

4. Procédé selon une des revendications 1 à 3, **caractérisé en ce que** la zone principale (5) de l'image originale (1) à transformer sans déformation est décalée automatiquement ou en se basant sur des prescriptions de l'utilisateur et qu'il y une actualisation en continu de l'image affichée (7) en poursuivant la transformation.

5. Procédé selon une des revendications 1 à 4, **caractérisé en ce que** la fonction de déformation est choisie de manière à ce qu'aucune discontinuité n'apparaisse dans l'ensemble de l'image affichée.

6. Procédé selon une des revendications 1 à 5, **caractérisé en ce que**, dans l'image originale (1), sont définies plusieurs zones principales (1) qui sont toutes affichées sans déformation dans l'image affichée (7).

7. Procédé selon une des revendications 1 à 6, **caractérisé en ce qu'**il y a de plus une analyse graphique de l'image originale afin de déterminer et, en cas de besoin, de faire afficher, des informations graphiques supplémentaires, notamment la distance par rapport aux objets détectés, la vitesse d'objets déplacés, la différence de vitesse entre un objet détecté et un appareil de prise d'images déplacé, la taille des objets détectés.

8. Système de traitement d'images comprenant un appareil de prise d'images (8) pour l'enregistrement d'une image originale (1) en format original, une unité d'affichage (9) qui présente un format d'affichage ayant un rapport largeur-hauteur divergeant du format original et une unité de traitement d'images (10) qui englobe une unité de transformation exécutant un procédé selon une des revendications 1 à 7 afin d'afficher une image affichée transformée (7) sur l'unité d'affichage (9).

9. Système de traitement d'images selon la revendication 8, **caractérisé en ce qu'**il comprend plusieurs appareils d'enregistrement d'images qui transmettent des images partielles à l'unité de traitement d'images (10), laquelle unité assemble les images partielles en une image originale et les met ensuite à disposition de l'unité de transformation.

**10.** Système de traitement d'images selon la revendication 8 ou 9, **caractérisé en ce qu'**il est intégré dans un véhicule (11), les appareils d'enregistrement d'images étant constitués par des caméras (8) qui sont fixées à l'intérieur du véhicule (11), ne dépassent pas de la paroi extérieure du véhicule (17) et prennent les images à travers des sections transparentes (18) de la paroi du véhicule (17).

**11.** Système de traitement d'images selon une des revendications 8 à 10, **caractérisé en ce que** l'unité d'affichage (9) est composée de plusieurs surfaces d'affichage séparées les unes des autres.

Fig. 1
- Stand der Technik -

Fig. 2

# Fig. 3

# Fig. 6

Fig. 4

Fig. 5